# EUROPEAN PATENT APPLICATION

(11) **EP 2 214 413 A2**
(43) Date of publication of application: **04.08.2010**
(21) Application number: 10000713.7
(22) Date of filing: 25.01.2010
(51) Int. Cl.: H04N 7/24, H04N 7/52

(54) **Server and client selective video frame pathways**

(30) Priority: 03.02.2009 US 365045
(71) Applicant: Broadcom Corporation, Irvine, CA 92617 (US)
(72) Inventor: Bennett, James D., 36301 Hroznetin (CZ); Karaoguz, Jeyhan, 92606 Irvine California (US)
(74) Representative: Jehle, Volker Armin

(57) **Abstract**

Video frames from a sequence of video frames and corresponding audio are received and processed by a client system. A portion of the video frames depend on one or more reference frames to be reconstructed and another portion are independent. The number of allowed reference frames per frame may be limited. The dependent and independent frames are treated differently. Independent frames are received at a lower data rate, with greater security and processed with a more robust protocol stack than the dependent frames. The dependent and independent frames may be stored in a single queue and/or separate queues. Independent frame data is utilized to compensate for lost frames when repeating and/or interpolating frames. Received audio content is synchronized with corresponding received frames, repeated frames and/or interpolated frames. The received, repeated and/or interpolated frames are assembled into display order and decoded. The audio content may be shifted in tone.

## Description

### CROSS-REFERENCE TO RELATED APPLICATIONS/INCORPORATION BY REFERENCE

This patent application makes reference to United States Patent Application Serial No._ (Attorney Docket No. 19391 US01) filed on even date herewith.

The above stated application is hereby incorporated herein by reference in its entirety.

### FIELD OF THE INVENTION

Certain embodiments of the invention relate to communication systems. More specifically, certain embodiments of the invention relate to a method and system for server and client selective video frame pathways.

### BACKGROUND OF THE INVENTION

For many people, multimedia communication technology has become a part of everyday life. Multimedia technology may be found in many popular portable or stationary devices, for example, mobile phones, digital handheld audio and/or video playback devices, laptops or personal computers, televisions, projection equipment, video and still camera displays, electronic gaming, set top box, medical and scientific equipment and home or commercial entertainment centers. Multimedia communication and playback devices have become prevalent in the market due to the low cost of communications technology and the ever increasing customer demand for more advanced media delivery systems.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for server and client selective video frame pathways, substantially as shown in and/or described in connection with at least one of the figures, as set forth more completely in the claims.

According to an aspect, a method for communication comprises:
receiving a sequence of video frames from a media source by a client device, wherein:
   video frames in said sequence of video frames that depend on one or more other video frames are received via a first communication path; and
   video frames in said sequence of video frames that are independent of one or more other video frames are received via a second communication path; and
   processing by said client device, said received sequence of video frames and corresponding audio content received from said media source.

Advantageously, the method further comprises applying a more robust processing to said independent video frames than to said dependent video frames in said client system.

Advantageously, the method further comprises receiving said independent video frames with a greater level of security than said dependent video frames.

Advantageously, the method further comprises storing said dependent video frames and said independent video frames in separate queues in said client system.

Advantageously, the method further comprises storing said dependent video frames and said independent video frames in a single queue in said client system.

Advantageously, the method further comprises generating repeated and/or interpolated video frames based on received independent video frames to compensate for loss of ones of said dependent video frames.

Advantageously, the method further comprises synchronizing said corresponding audio content utilizing said generating repeated video frames and/or interpolated video frames.

Advantageously, the method further comprises assembling said repeated video frames, said interpolated video frames and/or said received sequence of video frames into display order.

Advantageously, the method further comprises decoding said repeated video frames, said interpolated video frames and/or said received sequence of video frames.

Advantageously, the method further comprises tone shifting said corresponding audio content.

Advantageously, said media source limits a number of dependencies for video frames within said sequence of video frames when encoding video frames within said sequence of video frames.

Advantageously, said first communication path comprises a higher data rate than said second communication path.

According to an aspect, a system for communication comprises:
one or more circuits in a client device, wherein said one or more circuits are operable to receive a sequence of video frames from a media source, and wherein:
   video frames in said sequence of video frames that depend on one or more other video frames are received via a first communication path; and
   video frames in said sequence of video frames that are independent of one or more other video frames are received via a second communication path; and
   said one or more circuits are operable to process said received sequence of video frames and corresponding audio content received from said media source.

Advantageously, said one or more circuits are operable to apply a more robust processing to said independent video frames than to said dependent video frames in said client system.

Advantageously, said one or more circuits are operable to receive said independent video frames with a greater level of security than said dependent video frames.

Advantageously, said one or more circuits are operable to store said dependent video frames and said independent video frames in separate queues in said client system.

Advantageously, said one or more circuits are operable to store said dependent video frames and said independent video frames in a single queue in said client system..

Advantageously, said one or more circuits are operable to generate repeated and/or interpolated video frames based on received independent video frames to compensate for loss of ones of said dependent video frames.

Advantageously, said one or more circuits are operable to synchronize said corresponding audio content utilizing said generating repeated video frames and/or interpolated video frames.

Advantageously, said one or more circuits are operable to assemble said repeated video frames, said interpolated video frames and/or said received sequence of video frames into display order.

Advantageously, said one or more circuits are operable to decode said repeated video frames, said interpolated video frames and/or said received sequence of video frames.

Advantageously, said one or more circuits are operable to tone shift said corresponding audio content.

Advantageously, said media source limits a number of dependencies for video frames within said sequence of video frames when encoding video frames within said sequence of video frames.

Advantageously, said first communication path comprises a higher data rate than said second communication path.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram illustrating an exemplary server and client system for selective delivery for multimedia data, in accordance with an embodiment of the invention.

FIG. 1B is a block diagram illustrating exemplary referencing of video frames within a sequence of video frames comprising I frames, P frames and B frames, in accordance with an embodiment of the invention.

FIG. 2 is a block diagram illustrating an exemplary media sourcing server operable to selectively process and deliver multimedia data via multiple pathways, in accordance with an embodiment of the invention.

FIG. 3 is a flow chart illustrating exemplary steps for implementing selective delivery of multimedia data, in accordance with an embodiment of the invention.

### DETAILED DESCRIPTION OF THE INVENTION

Certain embodiments of the invention can be found in a method and system for selective video frame pathways for video frame delivery to a media player. In various embodiments of the invention, a sequence of video frames and corresponding audio are received from a media sourcing server and processed by a client system. Within the sequence of video frames, a portion of the video frames comprise data that is utilized to reconstruct video frames within the client system independent of data from other video frames. The independent portion of the video frames is received via a first communication path with a lower data rate. Another portion of the video frames from the sequence of video frames depend on data from one or more other frames to be reconstructed in the client system. The dependent portion of the video frames is received via a second communication path at a higher data rate. In this regard, the media sourcing server is operable to limit the number of allowed dependencies per frame when encoding video frames in the sequence of video frames.

The portion of video frames that comprise independent video frame data, are received in the client system with a higher level of security and are treated with a more robust process than the portion of frames that comprise dependent video frame data. In various embodiments of the invention, the client system stores the independent and dependent video frame data in separate pathway queues. In other embodiments of the invention, the client system stores the independent and dependent video frame data in a single pathway queue. The independent video frame data is utilized to compensate for lost dependent video frames by generating repeated frames and/or interpolated frames. The received audio content is synchronized with corresponding received video frames, repeated video frames and/or interpolated video frames. Furthermore, the received, repeated and/or interpolated video frames are assembled into display order and decoded. In various embodiments, the audio content may be tone shifted. In this manner, selected video frames may be processed according to their ability to improve video frame reconstruction and/or audio synchronization in the client system.

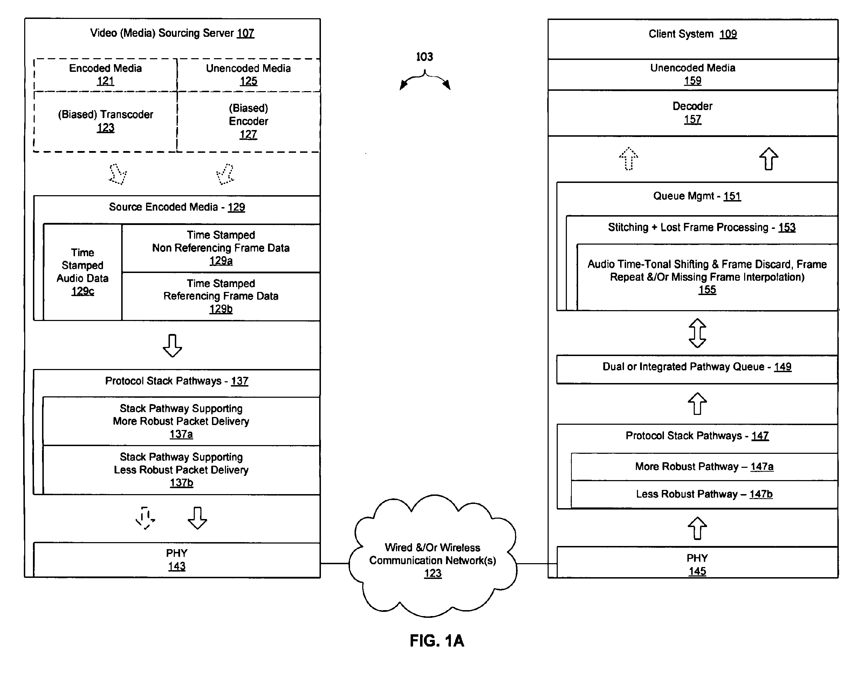

FIG. 1A is a block diagram illustrating an exemplary server and client system for selective delivery for multimedia data, in accordance with an embodiment of the invention. Referring to FIG. 1A, there is shown a multimedia communication system 103, a media sourcing server 107, encoded media 121, biased transcoder 123, unencoded media 125, biased encoder 127, source encoded media 129, time stamped non-referencing frame data 129a, time stamped referencing frame data 129b, protocol stack pathways 137, stack pathway supporting more robust packet delivery 137a, stack pathway supporting less robust packet delivery 137b, physical interface (PHY) 143, a wired and/or wireless communication networks 123, client system 109, PHY 145, protocol stack pathways 147, more robust pathway 147a, less robust pathway 147b, dual or integrated pathway queue 149, queue management 151, stitching and lost frame processing 153, video image restoration and audio sync 155, decoder 157 and unencoded media 159.

The media sourcing server 107 comprises suitable logic, circuitry and /or code that are operable to store, retrieve and/or capture multimedia data and selectively communicate the multimedia data to a client system 109. In this regard the multimedia data may be audio and/or video data. The media sourcing server 107 is operable to assign priority to multimedia packet data and may communicate the multimedia packet data via a plurality of packet delivery methods based on the assigned priority. The media sourcing server 107 is operable to communicate with the client system 109 via one or more wireless and/or wired communication networks. The sourcing server 107 may be any suitable computing and/or communication device that is capable of handling multimedia data, for example, a video server, a telephone, a web site streaming a live broadcast video channel, video on demand multicast or unicast or a personal computer (PC) playing video from, for example, a DVD or Blu-ray disc and transmitting it via the Internet to a client device.

The encoded media 121 comprises video and/or audio data that is compressed to a specified format, for example, according to a standardized method of compression such as MPEG-1, MPEG-2, MPEG-4 or H.264, and/or encrypted. The encoded media may have been received from another device or a storage medium such as a DVD, a hard disk, or Blu-ray disc, or may be captured and encoded by the video sourcing server 107. The encoded media 121 may be stored on the video sourcing server 107.

The biased transcoder 123 comprises suitable logic, circuitry and /or code that are operable to decode the encoded media 121, apply a bias to the decoded video frames and/or encode the video frames. In this regard, for each target frame in a sequence of video frames, the biased transcoder 123 is operable to identify the number of frames that it depends on for frame estimation information. In this regard, frame estimation may utilize video image pixel data from a reference frame along with information about how some elements of the reference frame change to form another similar frame. Exemplary frame estimation methods comprise frame repetition, motion vector estimation, motion vector interpolation and/or various image transformations such as for changes in hue, chroma and luminance.

In various embodiments of the invention, the video frames are biased by reducing the number of frame dependencies, for example, to zero or one. In this regard, a portion of the frames in a sequence of video frames may not reference any other frames but may be a reference for other frames. In addition, the biased transcoder 123 prioritizes the frames in a sequence of video frames according to the number of other frames it references. After the frames are sorted and prioritized, the biased transcoder encodes the frames according to the method utilized for the original encoded media 121 or it may encode the frames according to another method. Also, after the frames are sorted, prioritized and compressed, the compression ratio of the biased frame data may be worse than the compression ratio of the original encoded media 121 because of the reduced use of frame referencing.

The unencoded media 125 comprises video and/or audio data that is not compressed. The unencoded media 125 may be captured by the video sourcing server 107 and encoded. For example, the unencoded media 125 may be captured by a video camera on the sourcing server 107 or may be received from another device or a storage medium. The unencoded media 121 may be stored on the video sourcing server 107.

The biased encoder 127 comprises suitable logic, circuitry and /or code that are operable to encode the unencoded media 125 and apply a bias to the video frames. In this regard, for each target frame in a sequence of video frames, the biased encoder 127 is operable to identify the number of frames that the target frame depends on for frame estimation purposes. For example, estimation of a target frame depends on a reference frame as a basis for frame repetition, for predicting motion or for various image transformations. In various embodiments of the invention, the frames are biased by limiting the number of frame dependencies to zero or one for example. A portion of the frames in a sequence of video frames may not reference any other frames. Other frames may only reference one other frame for example. In addition, the biased encoder 127 prioritizes each of the frames in the sequence of video frames according to the number of other frames that it references. After the frames are sorted and prioritized, the biased encoder encodes the frames according to a specified format. In general, the compression ratio of biased encoded frame data may be less than unbiased encoded data because the number of a lower number of dependencies per frame.

The source encoded media 129 is exemplary frame data that is output from the biased transcoder 123 and/or the biased encoder 127. The source encoded media 129 comprises time stamped audio data 129c, time stamped non-referencing frame data 129a and/or time stamped referencing frame data 129b. In this regard, the non-referencing frame data 129a comprises video frames that do not depend on other frames for estimation of the non-referencing frame's image. The referencing frame data 129b comprises frame data that references other frames for estimation of a video image. The time stamping of audio data 129c, and video frames 129a and 129b enables sorting and syncing of audio and images on the client system 109. In various embodiments of the invention, the time stamped non-referencing frames 129a and the time stamped referencing frames 129b are sorted according to the number of frames that are referenced per frame. In this regard, frames that reference fewer other frames, for example, non-referencing frames 129a may be delivered to the client system 109 via a different pathway than frames that depend on other frames for estimation information.

The protocol stack pathways 137 comprise suitable logic, circuitry and/or code that are operable to implement various communication protocols with varying levels of security and/or robustness. In this regard, the protocol stack pathways 137 utilize a suite of protocols to format the source encoded media 129 in accordance with the OSI model, for example, the transport layer, network layer, data link layer and physical layer. In various embodiments of the invention, the stack pathway supporting more robust packet delivery 137a may be utilized to format the higher priority frame data from the source encoded media 129 and deliver it to a specified range of port numbers dedicated to reliable and/or secure delivery, for example, via transmission control protocol (TCP). In this regard, TCP guarantees properly ordered delivery of at least the non-referencing frames. Although TCP delivery is not as fast as some other transport layer protocols, only a portion of the frames are sent via this method. The lower priority frames are sent via the stack pathway supporting less robust packet delivery 137b. In this regard, the stack pathway supporting less robust packet delivery 137b may deliver packets comprising lower priority video frames via a range of port numbers for a faster but less reliable delivery, for example, user datagram protocol (UDP).

The physical interface (PHY) 143 comprise comprises suitable logic, circuitry and/or code that is operable to physically transmit the packets comprising the source encoded media 129 from the protocol stack pathways 137 to the client system 109 via the wired and/or wireless communication network 123. In addition, the PHY 145 comprises suitable logic, circuitry and/or code that is operable to receive the source encoded media from the PHY 143 via the wired and/or wireless network 123. The wireless and/or wired communication network 123 comprises one or more networks that are operable to transport multimedia data. For example, the wired and/or wireless networks may comprise one of more of a WAN, LAN, WLAN, WiFi, WiMax, Bluetooth, and ZigBee networks.

The protocol stack pathways 147 comprise suitable logic, circuitry and/or code that are operable to receive the packets comprising the source encoded media 129 via the more robust pathway 147a and/or the less robust pathway 147b from the single PHY 145. The protocol stack pathways remove the encapsulation of the lower layer protocol layers. In addition, the protocol stack pathway 147 may deliver the source encoded media to the dual or integrated pathway queue 149.

The queue management 151 comprises suitable logic, circuitry and/or code that is operable to receive the source encoded media 129 frames from the dual or integrated pathway queue 149 and restore images in the video frames and synchronize the audio and video frames. The video restoration and audio sync module 155 may be operable to provide compensation for missing video frames in various ways. In an exemplary embodiment of the invention, the video restoration and audio sync 155 module may be operable to repeat one or more frames if a prior or a subsequent frame is missing. In this manner, the audio stay in sync with the video images. In instances when one or more frames less than a specified threshold are missing, the missing frames may be replaced with interpolated frames and the audio may stay in sync with the interpolated frames. In other instances when one or more frames greater than a specified threshold missing, the frames may be discarded and the audio play back rate may be increased to catch up over some number of frames to the video frames to achieve synchronous audio and video images. In this regard, the increased audio rate may cause a temporary tonal shift until the video and audio sync is achieved. In addition, the stitching and lost frame processing 153 is operable to receive the restored and synced frames and reassemble them into the proper sequence according to the time stamps and/or sequence numbers. The queue management frame 151 is operable to forward the reassembled frames comprising the source encoded media 129 to the decoder 157.

The decoder 157 comprises suitable logic, circuitry and/or code that are operable to decode the biased video frames. In various embodiments of the decoded frames may be encoded without a bias for storage on the client system 109. In this regard the removal of the biasing may improve the compression ratio for more compact storage. In other embodiments of the invention, the decoder 157 may output the unencoded media 159 for consumption by the client system 109.

In operation, a sequence of video frames and corresponding audio are received from a media sourcing server 107 and processed by a client system 109. Within the sequence of video frames, a portion of the video frames comprise data that can be utilized to reconstruct video frames within the client system 109, independent of data from other video frames. The independent portion of the video frames is received via a first communication path with a lower data rate. Another portion of the video frames from the sequence of video frames depend on data from one or more other video frames to be reconstructed in the client system 109. The dependent portion of the video frames is received via a second communication path at a higher data rate. In this regard, the media sourcing server 107 limits the number of allowed dependencies per frame when encoding video frames in the sequence of video frames.

The portion of video frames that comprise independent frame data, are received in the client system 109 with a higher level of security and are treated with a more robust process than the portion of video frames that comprise dependent frame data. In various embodiments of the invention, the client system 109 stores the independent and dependent frame data in separate pathway queues 149. In other embodiments of the invention, the client system 109 stores the independent and dependent frame data in a single pathway queue 149. The independent frame data is utilized to compensate for lost dependent video frames by generating repeated video frames and/or interpolated video frames. The received audio content is synchronized with corresponding received video frames, repeated video frames and/or interpolated video frames. Furthermore, the received, repeated and/or interpolated video frames are assembled into display order and decoded. In various embodiments, the audio content may be tone shifted.

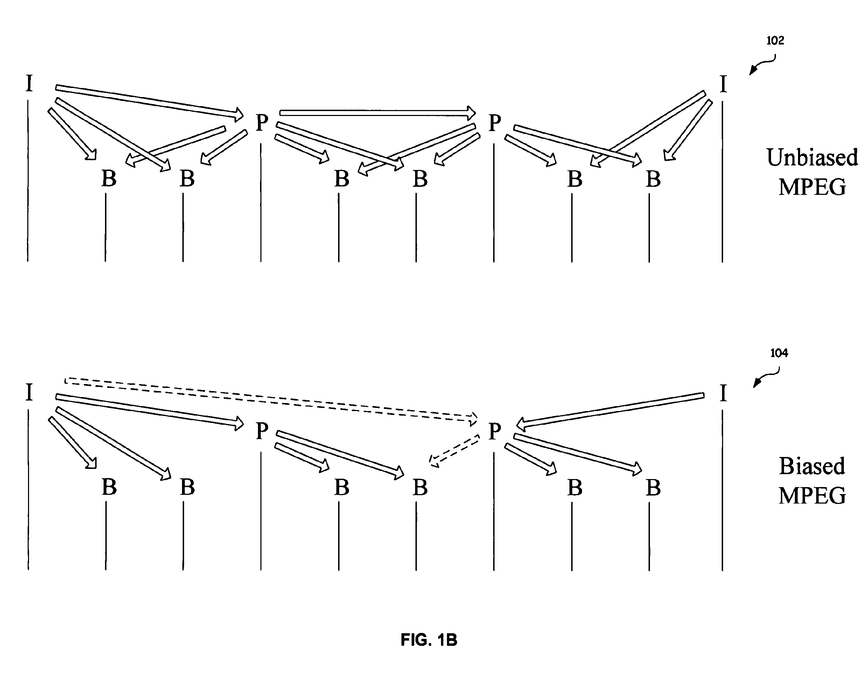

FIG. 1B is a block diagram illustrating exemplary referencing of video frames within a sequence of video frames comprising I frames, P frames and B frames, in accordance with an embodiment of the invention. Referring to FIG. 1B, there is shown an exemplary sequence of video frames 102 that comprises I frames, B frames and P frames. The sequence of video frames 102 represents an exemplary sequence of video frames that are encoded similarly to MPEG1 or MPEG2. Notwithstanding, any other suitable compression standard may be modified in accordance with an embodiment of the invention, for example, MPEGv4 Part 10 (AVC) or H.264. The origin of an arrow shown in the sequence of video frames 102 indicates a reference frame of image data that is utilized along with motion vector data or other image transformation information to estimate the frame pointed to by the arrow. In this regard, the arrow originates at a reference frame and points to a referencing frame. The I frames, B frames and P frames are shown in display order, however; the frames are decoded in order of a reference frame first, a referencing frame next, a re-referencing frame next and so on. In this regard, data for re-constructing a plurality of images is received by a client system prior to decoding the referencing frames that depend on one or more reference frames.

The I frames are intra coded video frames. For example, the image data for the I frames is derived from encoded pixel data wherein the pixels span the dimensions of an image or a portion of an image. When the pixel data is decoded it may be utilized to construct the I frame and also may be utilized as reference data to construct a P frame and/or a B frame. The P frames are predicted video frames that may be generated by utilizing referenced decoded pixel data from another image or frame along with information describing how that image data can be transformed into the P frame. For example, motion vectors, shifts in hue or luminance may be applied to a reference frame to generate a P frame. In the sequence of video frames 102, the P frames are shown later in display order than their referenced I frames and some P frames reference prior P frames. The B frames are bi-predictive frames which reference two previously decoded video frames. In addition, the B frames may be re-referencing frames wherein a B frame may reference a frame that references another frame. For example, a B frame may reference a P frame which references an I frame. In the unbiased sequence of video frames 102, referencing creates dependencies on multiple frames within the sequence of video frames. In instances where an I frame or information for another frame which is depended on by one or more referencing frames is lost or corrupted in transmission between the media sourcing server 107 and the client system 109, a plurality of frames are lost and cannot be effectively reconstructed. This may cause a loss of sync and/or a disruption in the perceived video image.

The exemplary sequence of video frames 104 represents results of a method of encoding frames with a bias wherein the number of frames that are utilized to reconstruct an image is reduced to one or two. In instances when image data in an I frame, for example, the last I frame in display order of the sequence of video frames 104, is very different from a prior frame B, a second option for reconstructing the B frame may be utilized as is shown by the referencing arrows rendered with a broken line. In addition, the second option may be utilized when a referenced P frame is lost in transmission. In various embodiments of the invention, there may be fewer P and B frames between I frames to reduce referencing to only one level of dependency. Accordingly, data compressed with the method of biased encoding shown in the sequence of video frames 104 may comprise a greater volume of data and a lower compression ratio than the data compressed with the encoding method represented by the sequence of video frames 102. However, the encoding method utilized for the sequence of video frames 104 enables greater reliability in reconstruction of the video frames in the client system 109 and an improved syncing capability.

In operation, the media sourcing server 107 captures multimedia data, for example, the unencoded media data 125 or retrieves stored multimedia data, for example, the encoded media 121. In instances when the unencoded media 125 is utilized, the sourcing server 107 encodes the media with a bias to limit the number of dependencies per video frame. In instances when the encoded media 121 is utilized, the media is decoded by the transcoder 123 and subsequently encoded with a bias to limit the number of frame dependencies. In this regard, the encoded media output from the transcoder 123 may or may not be compliant with the same standard as the encoded media 121. The source encoded media 129 is output from the transcoder 123 and/or the encoder 127. The source encoded media 129 is time stamped to generate the time stamped non-referencing frame data 129a, the time stamped referencing frame data 129b and the time stamped audio data 129c. The time stamped data is sent to the protocol stack pathways 137 wherein the sorted and time stamped video frames 129a and 129b are packetized and sent via the stack pathway supporting more robust packet deliver 137a and/or the stack pathway supporting less robust packet delivery 137b respectively. The packetized source encoded media 129 is sent to the single PHY 143 via a dual pathway or via one integrated pathway. The PHY 143 transmits the packetized time stamped source encoded media 129 over the physical medium to the single PHY 145 in the client system 109. The PHY 145 sends the packetized source encoded non-referencing frames 129a to the more robust pathway 147a and the packetized source encoded referencing frames 129b to the less robust pathway 147b. The protocol stack pathways 147 are operable to communicate the source encoded media 129 to the dual or integrated pathway queue 149. The video image restoration and audio sync 155 and stitching and lost frame processing 153 in the queue management 151 module compensate for lost or damaged video frames, for example, utilizing frame discard, frame repeat and/or missing frame interpolation and reassemble estimated frames. The time stamped source encoded frames and estimated frames are synced with the time stamped audio and sent to the decoder 157. The unencoded media 159 may be consumed by the client system 109. In various embodiments of the invention, the unencoded media 159 may be encoded to a higher level of compression for subsequent storage for example.

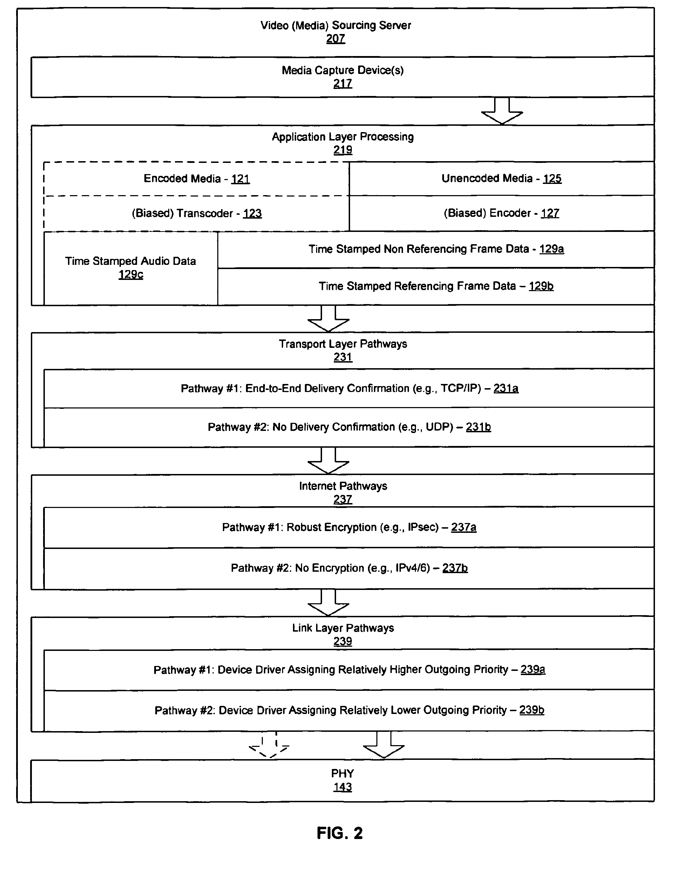

FIG. 2 is a block diagram illustrating an exemplary media sourcing server operable to selectively process and deliver multimedia data via multiple pathways, in accordance with an embodiment of the invention. Referring to FIG. 2, there is shown a media sourcing server 207, media capture device 217, application layer processing 219, optional encoded media 121, optional biased transcoder 123, unencoded media 125, biased encoder 127, time stamped non-referencing frame data 129a, time stamped referencing frame data 129b, time stamped audio data 129c, transport layer pathways 231, transport pathway-one 231a, transport pathway-two 231b, Internet protocol (IP) pathways 237, robust IP pathway-one 237a, less robust IP pathway-two 237b, link layer pathways 239, link pathway-one 239a, link pathway-two 239b and PHY 143.

The media sourcing server 207 is similar or substantially the same as the media sourcing server 107 described with respect to FIG. 1A.

The media capture device 217 may be any suitable device capable of capturing multimedia data for example, a video camera and microphone, a cellular phone or a laptop with camera and/or microphone for example. In various embodiments of the invention, a storage device is operable to store information comprising multimedia data that may be distributed by the video sourcing server 107.

The application layer 219 comprises suitable logic, circuitry or code that is operable to encode video frames with a bias and to parse and sort the encoded video frames according to the number of frames each depends on. The optional encoded media 121, optional biased transcoder 123, unencoded media 125, biased encoder 127, time stamped non-referencing frame data 129a, time stamped referencing frame data 129b, time stamped audio data 129c are similar or substantially the same as the respective numbered items described with respect to FIG. 1A. In this regard, the optional encoded media 121, optional biased transcoder 123 may be utilized in various embodiments that distribute multimedia data retrieved from a storage device for example.

The transport layer pathways 231 comprise suitable logic, circuitry and/or code that are operable to implement transport layer services to the encoded media data that is output from the application layer 219. In this regard, the transport layer pathways 231 comprise dual pathways that offer varying levels of reliability. For example, the more robust transport pathway-one 231 a, may encapsulate the time stamped non-referencing frame data 129a according to TCP/IP protocols. In this manner, the frame data that is most critical to robust frame reconstruction and the syncing of audio and video data on the client system 109 is delivered in the most reliable manner. Although the TCP/IP delivery may be slower than other transport layer methods, the TCP/IP delivery of packets is guaranteed and the packets are delivered in order. Furthermore, the less reliable but faster transport pathway-two 231 b may encapsulate the time stamped referencing data 129b according to UDP protocols. In this manner, the less robust transport pathway-two 231 b handles the frame data that is less critical to robust frame reconstruction and syncing on the client system 109. For example, missing referencing frames are compensated for when reconstructing video frames and syncing audio on the client system 109. For example, the stitching and lost frame processing 153 and video image restoration and audio sync 155 modules in the client system 109 can more easily recover from lost or damaged referencing frames 129b than from frames that are referenced by them and are lost.

The IP pathways 237 may comprise suitable logic, circuitry and /or code that are operable to implement Internet protocols with varying levels of security. For example, the time stamped non-referencing frame data 129a that is output from the TCP/IP transport pathway-1 231a may be encrypted for a higher level of security by the robust Internet pathway-1 237a. In this regard, IPsec may be utilized to encrypt and/or authenticate each packet delivered via the robust Internet pathway-1 237a. In this manner the critical video frames 129a are protected from interception by an unauthorized entity. Notwithstanding, the less critical time stamped referencing frame data 129b that is handled by UDP may be handled by the less robust IP pathway-2, 237b. The less robust IP pathway-2 237b may utilize IPv4 or IPv6 protocols that do not encrypt the frame data. IPv4 or IPv6 may be sufficient for 129b delivery because the referencing frames 129b are useless when restoring video frames without use of the non-referencing frames 129a.

The link layer pathways 239 comprise suitable logic, circuitry and/or code that are operable to sort the frame packets according to priority for delivery to the PHY 143 and handle routing in the wired and/or wireless communication network 123. In this regard, the link pathway-1 239a handles the non-referencing frame data packets that are output from the robust IP pathway-1 237a. The link pathway-2 239b handles the referencing frame data packets output from the less robust IP pathway-2 237b. The link layer pathways 239 may prioritize delivery of packets in the queues according to which the sequence of video frames a packet belongs to and by whether a packet comprises non-referencing or referencing frames. For example, the non-referencing frames of one sequence of video frames are sent first. Subsequently, the referencing frames of the same sequence of video frames are sent. After all frames from one sequence of video frames are sent, a subsequent sequence of video frames is handled.

In operation, media is captured by the media capture device 217 in the video sourcing server 207 and it is encoded by the encoder 127 with a bias for limiting a number of dependencies on reference frames. The encoded video frames are parsed and sorted according to the number of frames that a target frame depends on. The video and audio frames are time stamped and the video frames with fewer dependencies are assigned a higher priority than frames with a greater number of frames from which they depend. Also, a higher level of external quality of service (QoS) that may enable guarantee of packet delivery may be assigned to the higher priority frames. The higher priority frames, for example from the frame data 129a, is sent to the transport pathway-1 231a for TCP/IP transport services and then to the robust IP pathway-1 237a for encryption and then to a queue in the link pathway-1 239a. In addition, the lower priority frames, for example, from the frame data 129b, is sent to the transport pathway-2 231 b for UDP transport services, then to the IP pathway-2 237b and then to a queue in the link pathway-2 239b. The PHY 143 delivers all of the packets comprising frames from a first sequence of video frames before all of the packets from a second sequence of video frames. In addition, the PHY 143 delivers the packets within a sequence of video frames comprising higher priority frame data before delivering packets within the same sequence of video frames comprising lower priority frame data.

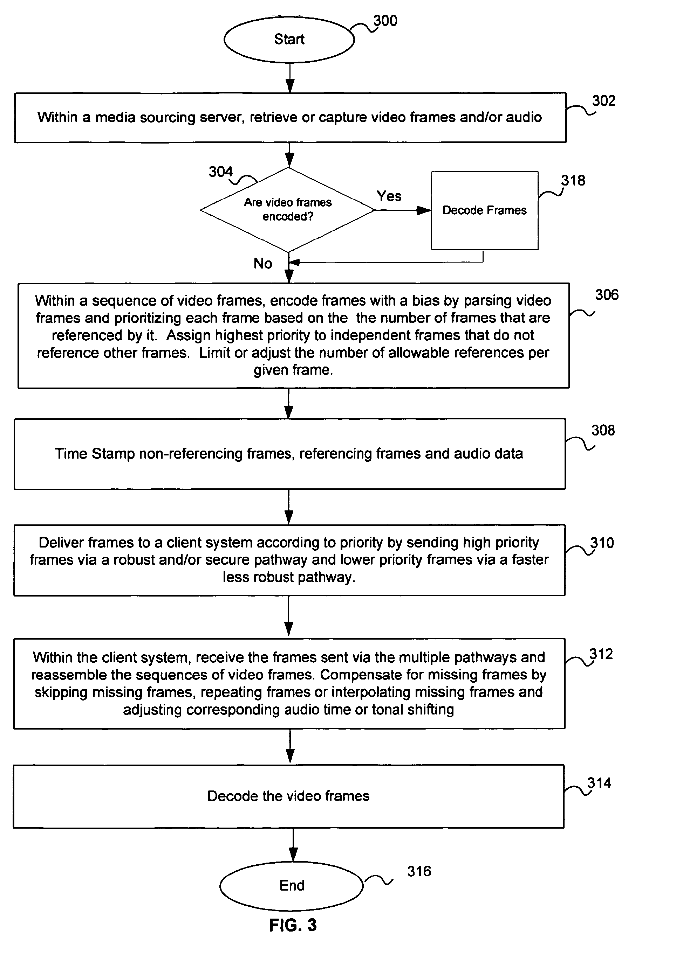

FIG. 3 is a flow chart illustrating exemplary steps for implementing selective delivery of multimedia data, in accordance with an embodiment of the invention. Step 300 is a start step. In step 302, within a media sourcing server 107, video frames are retreived or captured. In step 304, if the video frames are not encoded, proceed to step 306. In step 306, within the application layer 219, for a sequence of video frames, frames with a bias are encoded by parsing video frames and prioritizing each frame based on the the number of frames that are referenced by it. A highest priority is assigned to independent frames that do not reference other frames. The number of allowable references made per given frame is limited or adjusted. In step 308, within the application layer 219, non-referencing frames 129a, referencing frames 129b and audio 129c frames are time stamped. In step 310, frames are delivered to the client system 109 according to priority by sending high priority frames via a robust and secure pathway 137a and lower priority frames via a faster less robust pathway 137b. In step 312, within the client system 109, frames that were sent via the multiple pathways are received and reassembled into sequences of video frames. Missing frames may be compensated for by skipping frames, repeating frames or interpolating missing frames and adjusting corresponding audio time or tonal shifting. In step 314, the video frames may be decoded. Step 316 is an end of exemplary steps. In step 304, if the video frames are encoded, proceed to step 318. In step 318, the video frames are decoded.

In an embodiment of the invention, a sequence of video frames and corresponding audio are received from a media sourcing server 107 and processed by a client system 109. Within the sequence of video frames, a portion of the video frames comprise data that are utilized to reconstruct video frames within the client system 109, independent of data from other video frames. The independent portion of the video frames is received via a first communication path with a lower data rate. Another portion of the video frames from the sequence of video frames depend on data from one or more other video frames to be reconstructed in the client system 109. The dependent portion of the video frames is received via a second communication path at a higher data rate. In this regard, the media sourcing server 107 limits the number of allowed dependencies per frame when encoding video frames in the sequence of video frames. Moreover, the media sourcing server 107 time stamps the dependent video frames, independent video frames and/or corresponding audio data. The media sourcing server 107 applies a more robust treatment in a more robust protocol stack to the independent video frames and a less robust treatment to the dependent video frames. In addition, the media sourcing server 107 encrypts the independent video frames. The media sourcing server 107 delivers the independent video frames with a more reliable method than that which is utilized for the delivery of the dependent video frames. The media sourcing server 107 may send the dependent video frames via a faster and/or less reliable method.

The portion of video frames that comprise independent frame data, are received in the client system 109 with a higher level of security and are treated with a more robust process than the portion of video frames that comprise dependent frame data. However, the portion of video frames that comprise dependent frame data may be received at a higher data rate. In various embodiments of the invention, the client system 109 stores the independent and dependent frame data in separate pathway queues 149. In other embodiments of the invention, the client system 109 stores the independent and dependent frame data in a single pathway queue 149. The independent frame data is utilized to compensate for lost dependent video frames by generating repeated video frames and/or interpolated video frames. The received audio content is synchronized with corresponding received video frames, repeated video frames and/or interpolated video frames. Furthermore, the received, repeated and/or interpolated video frames are assembled into display order and decoded. In various embodiments, the audio content may be tone shifted.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for a method and system for server and client selective video frame pathways.

Accordingly, the present invention may be realized in hardware, software, or a combination of hardware and software. The present invention may be realized in a centralized fashion in at least one computer system or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
receiving a sequence of video frames from a media source by a client device, wherein:
video frames in said sequence of video frames that depend on one or more other video frames are received via a first communication path; and
video frames in said sequence of video frames that are independent of one or more other video frames are received via a second communication path; and
processing by said client device, said received sequence of video frames and corresponding audio content received from said media source.

2. The method according to claim 1, comprising applying a more robust processing to said independent video frames than to said dependent video frames in said client system.

3. The method according to claim 1, comprising receiving said independent video frames with a greater level of security than said dependent video frames.

4. The method according to claim 1, comprising storing said dependent video frames and said independent video frames in separate queues in said client system.

5. The method according to claim 1, comprising storing said dependent video frames and said independent video frames in a single queue in said client system.

6. The method according to claim 1, comprising generating repeated and/or interpolated video frames based on received independent video frames to compensate for loss of ones of said dependent video frames.

7. A system for communication, the system comprising:
one or more circuits in a client device, wherein said one or more circuits are operable to receive a sequence of video frames from a media source, and wherein:
video frames in said sequence of video frames that depend on one or more other video frames are received via a first communication path; and
video frames in said sequence of video frames that are independent of one or more other video frames are received via a second communication path;
and
said one or more circuits are operable to process said received sequence of video frames and corresponding audio content received from said media source.

8. The system according to claim 7, wherein said one or more circuits are operable to apply a more robust processing to said independent video frames than to said dependent video frames in said client system.

9. The system according to claim 7, wherein said one or more circuits are operable to receive said independent video frames with a greater level of security than said dependent video frames.

10. The system according to claim 7, wherein said one or more circuits are operable to store said dependent video frames and said independent video frames in separate queues in said client system.
